# EUROPEAN PATENT APPLICATION

(11) **EP 0 947 143 A1**
(43) Date of publication of application: **06.10.1999**
(21) Application number: 98203367.2
(22) Date of filing: 06.10.1998
(51) Int. Cl.: A23L 1/16

(54) **Cooked, acidified pasta**

(30) Priority: 29.03.1998 EP 98200986
(71) Applicant: SOCIETE DES PRODUITS NESTLE S.A., 1800 Vevey (CH)
(72) Inventor: Meyer, Philipp Paul, 8121 Benglen (CH); Scoville, Eugene, New Milford, CT 06776 (US); Jaelminger, Göran, 25661 Helsingborg (SE)
(74) Representative: Wavre, Claude-Alain

(57) **Abstract**

Full moisture shelf stable pasta product having a pH of 3.7 to 4.5, and comprising a cooked or precooked pasta having a dry matter content of from 30 to 45% by weight, an acid and an oil.

## Description

The present invention relates to a pasta product consisting of cooked or precooked pasta having a long shelf life.

FR2502907 (BUITONI) discloses the production of precooked solid food, especially pasta products and rice, by precooking the food in acidulated water, cooling in acidulated water, draining off excess water, oiling, insertion into flexible containers and heat sterilising the sealed containers.

EP0489811 (MARS) discloses a process for preparing an acid stabilised pasta, which comprises cooking the pasta in an aqueous acid solution or suspension having a pH of from 2.0 to 4.0 and containing a polymeric food-acceptable acid.

EP0626137 (CPC) discloses a pasteurised, shelf-stable, uncooked or partially cooked moist pasta product packaged in a sealed container, the pasta having a moisture content from about 15 to about 38% and a pH below about 4.6.

A first object of the present invention is to provide a full moisture shelf stable pasta product of outstanding organoleptical quality which is not intended to be actually cooked at the consumer's end but, on the contrary, is intended to be consumed after unpacking and simply heating up or very shortly cooking.

A second object of the present invention is to provide a process for manufacturing a full moisture shelf stable pasta product of outstanding quality which is intended to be consumed after simply heating up or very shortly cooking.

The full moisture shelf stable pasta product according to the present invention has a pH of 3.7 to 4.5, preferably 3.8 to 4.3, and comprises a cooked or precooked pasta having a dry matter content of from 30 to 45% by weight, an acid and an oil.

The process for manufacturing a full moisture shelf stable pasta product according to the present invention consists of preparing a mixture having a dry matter content of 60 to 75% and comprising a cereal flour or semolina and added water, extruding the mixture, cutting the extruded pasta, portioning, blanching, water cooling, dipping into an acidified water, oiling, packaging and in pack pasteurising it.

Throughout the present disclosure, the expression "preparing a mixture" is intended to mean "preparing a mixture and/or kneading the mixture".

In the present pasta product, the cooked or precooked pasta may have been made of a starting raw material mixture comprising a cereal flour or semolina, especially Durum or hard wheat semolina, and possible additives such as wheat protein, especially gliadin enriched wheat protein, soft wheat flour, egg material, bakery powder, sodium chloride and/or spices, for example.

The acid may be any food grade acid, especially lactic acid, phosphoric acid, citric acid or Glucono-delta-lactone, for example.

The oil may be a vegetable oil, in an amount of from 0.5 to 5% by weight of the cooked or precooked pasta, for example. The oil may especially be peanut oil, rapeseed oil, sunflower oil, palm oil, corn oil, palm olein or mixtures thereof, for example. About 0.5 to 2% of emulsifiers, in % by weight of the oil, especially a monoglyceride or mixtures of monoglycerides, may advantageously be added to the oil, for example.

To implement the present process, a mixture may be prepared having a dry matter content of 60 to 75% and comprising added water, a cereal flour or semolina, especially Durum or hard wheat semolina, and possible additives such as wheat protein, soft wheat flour, egg material, bakery powder, sodium chloride and/or spices, for example.

Wheat protein, especially gliadin enriched wheat protein such as the product marketed under the name Lavor Pro by the company Midwest grain products, inc. Atchison, Kansas, USA, may be used in an amount of from about 1 to 3% by weight of the mixture, in order to reduce stickiness and starch losses during cooking and acidification, for example.

Soft wheat flour may be added to the mixture in order to increase the elasticity of the pasta product, for example.

Egg material in the form of whole egg powder, egg white powder or liquid whole egg may be added to the mixture in order to increase the firmness of the pasta product, for example.

Bakery powder, especially a mixture of Glucono-delta lactone and sodium bicarbonate may be added to the mixture in order to create a porous pasta product, for example.

The mixture may be prepared and extruded in any known pasta extrusion way, especially by means of an equipment comprising a paddle mixer, a twin screw kneader and a single screw extruder, or a twin screw mixer-kneader and a single screw extruder, or a twin screw mixer-kneader-extruder, or a twin screw mixer-kneader assisted by a gear pump for the extrusion, for example.

Care may be taken to ensure that the temperature of the mixture during mixing and/or kneading and extrusion remains below 55°C.

The extruded pasta may be cut into long pasta goods such as long spaghetti, but is preferably cut into short pasta goods such as short spaghetti, linguine, eliche or even local specialities such as "Spätzle" from central Europe, for example.

The step of portioning, namely dividing or dosing the pasta into portions which then will be individually packaged, may be carried out at any stage after the cutting step and before the packaging step.

The extruded pasta may be hot air treated to fix the shape before blanching and to get a product firmer in bite.

The extruded pasta may be blanched by steaming or by steaming and hot water-spraying, preferably hot acid water-spraying, for example, the purpose of water-spraying during steaming being to minimise starch losses during blanching.

The blanching step may be carried out at 95-100°C for 1 to 10 min, while steaming with steam at 98-100°C and spraying water at 95-98°C, preferably water having a pH of from 3.5 to 5.0, for example.

During the blanching step, the water uptake may be such that the pasta has then a dry matter content of between 35 to 52%, preferably 39 to 47%, for example.

After the blanching step, the pasta may be advantageously showered with a hot water spray. In other words the pasta may be passed under a shower of hot water, especially of water having a temperature of from about 60 to 70°C, for example, in order to loosen the strands which can be slightly sticky after having been steamed.

Water cooling may be carried out in a bath of water at ambient temperature, namely at a temperature of between about 18 to 35°C, for about 30 s to 2 min, for example.

After water cooling, excess water may be drained off for about 30 s to 2 min, for example.

During the water cooling step, the blanching step may be stopped completely and the water uptake may be such that the pasta has then a dry matter content of between about 30 to 45%, preferably 33 to 42%, for example.

After water cooling and possibly draining off excess water, the pasta is dipped into an acidified water in order to be acidified to a final pH of 3.7 to 4.5. To this end, the pasta may be dipped into a water containing from 0.5 to 2.0% acid, especially lactic acid, phosphoric acid, citric acid or Glucono-delta-lactone, at ambient temperature, especially at a temperature of from 18 to 35°C, for from 50 to 250 s, for example.

After this acidifying step, excess acidified water may be drained off for about 30 s to 2 min, for example.

During the acififying step, there is very little further water uptake. The acidification of the pasta appears to be mainly a result of osmotic equilibration.

The oiling step may be carried out so that the surface of the pasta is coated with oil in an amount of from 0.5 to 5% by weight of the pasta, for example. In order that the oil is well distributed in very fine particle over the pasta surface, about 0.5 to 2% of emulsifiers, in % by weight of the oil, may be added to the oil, for example.

The oiling step may be carried out either before or during the packaging step. Preferably, the pasta is packaged in a flexible pouch with controlled volume of head space. To this end, the pasta may be dosed into a vertical pouch after its bottom has been sealed and oil may be injected into the pouch before its top is sealed, for example.

Eventually the packaged pasta product is in pack pasteurised.

This in pack pasteurising step may be carried out in a steam medium, while having the temperature in the centre of the pouch reaching a temperature of from 80 to 100°C and holding it for from 1 to 80 min, for example.

The pouches may then be cooled either for 5 to 15 min in cold water containing a disinfectant, or for 30 to 60 min by chilled air, at 5 to 15°C, for example.

The present process may be implemented by means of normal equipment such as mixer, kneader, extruder, steeping unit, steam/water spraying blancher, water bath, shower and pasteurising unit from the pasta or noodle industry, for example.

The present process surprisingly provides a pasta product having outstanding organoleptical properties, especially an outstanding texture, in view of the fact that it is not intended to be actually cooked again at the consumer's end but only heated up or very shortly cooked.

Heating up or very shortly cooking the present pasta product may be carried out in a pan, in a microwave oven, or by pouring hot or boiling water onto it, for example.

The pasta product and the process according to the present invention are illustrated in the following Examples in which the percentages and parts are by weight unless otherwise stated.

### Example 1

A precooked spaghetti product having a long shelf life was made from a mixture having a dry matter content of 68.2% and comprising 76% Durum semolina, 2.35% Flavor Pro 6000 and 21.65% tap water.

Durum semolina and Flavor Pro 6000 were premixed with water. The mixture was kneaded to a dough and extruded using a regular pasta-extruder manufactured by the company MAPIMPIANTI. The pressure in front of the die was between 100 and 110 bar with a dough temperature of from 40 to 42°C. The die had circular openings 2.2 mm in diameter.

The fresh extruded pasta was cut to 25-26 cm in length and portioned or dosed in 104 g portions.

The pasta was then blanched at about 98°C for 200 s along a tunnel blancher in which steam injection means injected steam at 99°C and water spraying means sprayed acidified water having a pH of 4.3 and a temperature of 96-97°C.

During the blanching step, the water uptake was such that the pasta had then a dry matter content of from 41 to 45%.

After the blanching step, the pasta was showered with a hot water spray having a temperature of from 60 to 70°C, and it was then water cooled in a bath of water at from 20 to 25°C for 45 s.

During the water cooling step, the water uptake was such that the pasta had then a dry matter content of from 38 to 42%.

After water cooling, excess water was drained off for 60 s.

The pasta was then dipped into a water bath containing 1.6% lactic acid, having a pH of 2.2-2.3 and having a temperature of 30°C, for 150 s.

During the acififying step, the water uptake was such that the pasta had then a dry matter content of from 36 to 40%.

After the acidifying step, excess acidified water was drained off for 60 s.

After the acidifying step the pasta had a pH of 3.9-4.0.

The pasta portions then weighing about 180 g were dosed into vertical pouches after their bottoms had been sealed, and 1.8 g palmolein were injected into each pouch before their tops were sealed.

The pasta was in pack pasteurised in steam at 97°C, the temperature in the centre of the pouch reaching a temperature of 85°C after 20 min and this temperature being hold for 10 min.

The pouches were then cooled for 10 min in water having a temperature of 10°C and containing a disinfectant. The pouches were subsequently stored at room temperature, namely at about 25°C.

The pasta product could be prepared for consumption by unpacking and heating up.

The pasta did not stick together. It had outstanding organoleptical properties, especially a texture similar to the texture of fresh cooked spaghetti.

### Example 2

A precooked "Spätzle" product having a long shelf life was made from a mixture having a dry matter content of 71.5% and having the following composition in %:

| | |
|---|---|
| Durum semolina | 65 |
| Soft wheat flour | 7.3 |
| Liquid whole egg | 10.8 |
| Glucono delta lactone | 3.251 |
| NaHCO3 | 1.084 |
| Spices | 0.525 |
| Tap water | 12.04 |

The dry ingredients were premixed with liquid whole egg and water. The mixture was kneaded to a dough and extruded using a regular pasta-extruder manufactured by the company TORESANI. The pressure in front of the die was about 30 bar with a dough temperature of 43°C. The die had oblong openings about 2 mm in width and a few mm in length.

The fresh extruded pasta was cut to 4-5 cm in length and portioned or dosed in about 100 g portions.

The portioned pasta was then blanched, showered, water cooled, dipped into an acid containing water bath, oiled, packaged and in pack pasteurised as disclosed in Example 1, except that the "Spätzle" pasta was blanched for 450 s instead of 200 s and that it was dipped in the acid containing water bath for 180 s instead of 150 s.

The in pack pasteurised full moisture shelf stable "Spätzle" product thus obtained had a pH of 4.0-4.1 and had a dry matter content of about 39-40%.

The pasta product could be prepared for consumption by heating up.

The pasta did not stick together. It had outstanding organoleptical properties, especially a texture similar to the texture of fresh cooked "Spätzle".

## Claims

1. A full moisture shelf stable pasta product, which has a pH of 3.7 to 4.5, preferably 3.8 to 4.3, and which comprises a cooked or precooked pasta having a dry matter content of from 30 to 45% by weight, an acid and an oil.

2. A pasta product according to claim 1, in which the acid is a food grade acid, especially lactic acid, phosphoric acid, citric acid or Glucono-delta-lactone.

3. A pasta product according to claim 1, which comprises 0.5 to 5% oil, in % by weight of the cooked or precooked pasta.

4. A pasta product according to claim 1, in which the oil is vegetable oil, especially peanut oil, rapeseed oil, sunflower oil, palm oil, corn oil, palm olein or mixtures thereof.

5. A process for manufacturing a full moisture shelf stable pasta product, which consists of preparing a mixture having a dry matter content of 60 to 75% and comprising a cereal flour or semolina and added water, extruding the mixture, cutting the extruded pasta, portioning, blanching, water cooling, dipping into an acidified water, oiling, packaging and in pack pasteurising it.

6. A process according to claim 5, in which the blanching step is carried out at 95-100°C for 1 to 10 min, while steaming with steam at 98-100°C and spraying water at 95-98°C.

7. A process according to claim 5, in which the pasta is dipped into an acidified water containing from 0.5 to 2.0% acid, especially lactic acid, phosphoric acid, citric acid or Glucono-delta-lactone, at ambient temperature, especially at a temperature of from 18 to 35°C, for from 50 to 250 s.
